# EUROPEAN PATENT APPLICATION

(11) **EP 3 016 374 A1**
(43) Date of publication of application: **04.05.2016**
(21) Application number: 15191966.9
(22) Date of filing: 28.10.2015
(51) Int. Cl.: H04N 5/232

(54) **ELECTRONIC DEVICE FOR SENSING LENS AND OPERATING METHOD THEREOF**

(30) Priority: 28.10.2014 KR 20140146926
(71) Applicant: Samsung Electronics Co., Ltd., Gyeonggi-do 16677 (KR)
(72) Inventor: KIM, Kyoung Up, 16548 Gyeonggi-do (KR)
(74) Representative: HGF Limited

(57) **Abstract**

A method for operating an electronic device includes detecting at least one lens module that is mounted on a camera module, wherein the at least one lens module is removable and recognized by a sensor module. The method further includes selectively activating a first operating system and a second operating system in accordance with the detected at least one lens module, wherein the second operating system is activated when a processor determines that a camera function has been performed. The method further includes changing the operating system that is being used in accordance with a change of the detected at least one lens module.

## Description

### CROSS-REFERENCE TO RELATED APPLICATION AND CLAIM OF PRIORITY

The present application is related to and claims priority from and benefit of a Korean patent application filed on October 28, 2014 in the Korean Intellectual Property Office and assigned Serial number 10-2014-0146926, the entire disclosure of which is hereby incorporated by reference.

### TECHNICAL FIELD

The present disclosure relates generally to an electronic device including a camera module equipped with a removable lens.

### BACKGROUND

An electronic device (such as a digital camera, a smart phone, a tablet PC, or the like) includes a camera module and takes a picture or a video using the camera module. The electronic device edits or converts data of a captured picture or video. Furthermore, the electronic device sends picture data or video data to an external device. A lens for capturing a picture or a video is mounted on the camera module. As well as the mounted lens, various lenses may be mounted on the camera module based on various purposes of shooting a picture or a video.

A conventional electronic device may inform a user whether a lens is mounted. Furthermore, in the case of changing an operating system to edit a captured picture or video, or send it to an external device, the conventional electronic device is required to receive a separate input (such as a touch of a change button) from a user to change an operating system regardless of whether the lens is mounted thereon.

### SUMMARY

To address the above-discussed deficiencies, it is a primary object to provide at least the advantages described below. Accordingly, an aspect of the present disclosure is to provide an electronic device, which is capable of automatically changing an operating system based on whether a lens is mounted, and an operating method thereof.

In one embodiment, a method for operating an electronic device is provided. The method includes detecting at least one lens module that is mounted on a camera module. The at least one lens module is removable and recognized by a sensor module. The method further includes selectively activating a first operating system and a second operating system in accordance with the detected at least one lens module. The second operating system is activated when a processor determines that a camera function has been performed. The method further includes changing the operating system that is being used in accordance with a change of the detected at least one lens module. An apparatus for performing this method is also provided.

In some examples of the present disclosure the detecting at least one lens module further comprises detecting a usability of the lens module; and checking whether a lens cover is coupled.

In some examples of the present disclosure the sensor module comprises a first sensor module that is used to recognize whether the lens module is mounted and a second sensor module that is used to recognize whether the lens module is usable.

In some examples of the present disclosure the changing the operating system that is being used in accordance with a change of the detected at least one lens module comprises changing the first operating system that is being activated into the second operating system when the at least one lens module is mounted and useable.

In some examples of the present disclosure the changing the operating system that is being used in accordance with a change of the detected at least one lens module comprises changing the second operating system that is being activated into the first operating system when the at least one lens module is detached and unusable.

In some examples of the present disclosure the first operating system is an operating system that includes at least one loading time, an execution time, or a stabilization time of an application that is longer than a time of the second operating system.

In some examples of the present disclosure the first operating system is an Android OS or a window OS, and the second operating system is a real time OS (RTOS) or a tizen OS.

In some examples of the present disclosure the first operating system is driven by at least one first processor (or processor core) and the second operating system is driven by at least one second processor (or processor core) that is independent of the first processor.

In some examples of the present disclosure the at least one first processor or the at least one second processor is activated in a power management state consuming power that is less than a specific value.

In some examples of the present disclosure the at least one first processor is driven together with a first memory and the at least one second processor is driven together with a second memory that is independent of the first memory.

In some examples of the present disclosure the electronic device comprises a memory that is commonly accessible by the first operating system and the second operating system.

In some examples of the present disclosure the first operating system or the second operating system is activated by a boot loader associated with a usable state of the lens module.

In one embodiment an electronic device is provided. The electronic device includes at least one controller configured to: detect at least one lens module that is mounted on a camera module, wherein the at least one lens module is removable and recognized by a sensor module; selectively activate a first operating system and a second operating system in accordance with the detected at least one lens module, wherein the second operating system is activated when a processor determines that a camera function has been performed; and change the operating system that is being used in accordance with a change in the detected at least one lens module.

In some examples of the present disclosure the changing the operating system that is being used in accordance with a change of the detected at least one lens module comprises changing the first operating system that is being activated into the second operating system when the at least one lens module is mounted and useable.

In some examples of the present disclosure the changing the operating system that is being used in accordance with a change of the detected at least one lens module comprises changing the second operating system that is being activated into the first operating system when the at least one lens module is detached and unusable.

In some examples, a shooting-possible state refers to whether the camera module can currently be used to take a photograph or not such that determining a shooting-possible state is the determination of whether a photograph can be currently be taken by the camera module. For example, a first shooting-possible state may be when the lens module is mounted and the lens is usable i.e. a lens cover is not coupled to the lens module such that a photograph can currently be taken. Correspondingly, a second shooting-possible state may be when the lens module is not mounted and or the lens is not usable i.e. a lens cover is coupled to the lens module such that a photograph cannot currently be taken. In other examples, determining whether a camera function has been performed includes detecting when a camera mode is entered into, in response to a user input for instance.

Other aspects, advantages, and salient features of the disclosure will become apparent to those skilled in the art from the following detailed description, which, taken in conjunction with the annexed drawings, discloses various embodiments of the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates an example network environment for an electronic device according to various embodiments of the present disclosure;
FIG. 2 illustrates an example flowchart for driving a plurality of operating systems on an electronic device according to various embodiments of the present disclosure;
FIG. 3 illustrates an example flowchart for an electronic device changing an operating system according to various embodiments of the present disclosure;
FIGs. 4A, 4B, and 4C illustrate an example change in a display according to various embodiments of the present disclosure;
FIG. 5 illustrates an example block diagram of an electronic device according to various embodiments of the present disclosure;
FIG. 6 illustrates an example change of a first or a second operating system using a common memory according to various embodiments of the present disclosure;
FIG. 7 illustrates an example block diagram of an electronic device including hardware components for driving a first operating system and a second operating system according to various embodiments of the present disclosure; and
FIG. 8 is a block diagram illustrating an electronic device according to various embodiments of the present disclosure.

Throughout the drawings, it should be noted that like reference numbers are used to depict the same or similar elements, features, and structures.

### DETAILED DESCRIPTION

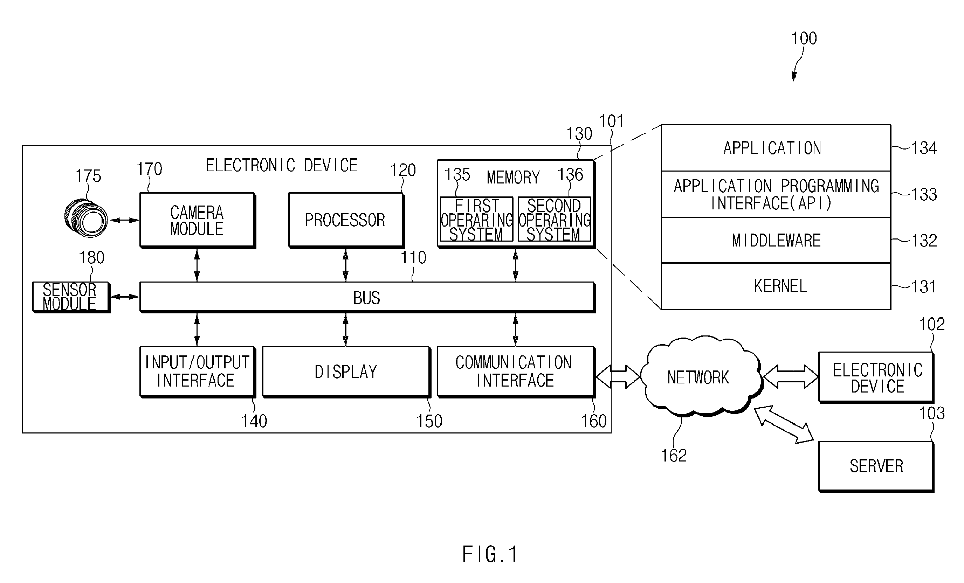

Figures 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device. Various embodiments of the present disclosure may be described with reference to accompanying drawings. Accordingly, those of ordinary skill in the art will recognize that modification, equivalent, and/or alternative on the various embodiments described herein can be variously made without departing from the scope of the present disclosure. With regard to description of drawings, similar components may be marked by similar reference numerals.

The term "include," "comprise," "including," or "comprising" used herein indicates disclosed functions, operations, or existence of elements but does not exclude other functions, operations or elements. It should be further understood that the term "include", "comprise", "have", "including", "comprising", or "having" used herein specifies the presence of stated features, integers, operations, elements, components, or combinations thereof but does not preclude the presence or addition of one or more other features, integers, operations, elements, components, or combinations thereof.

The meaning of the term "or" or "at least one of A and/or B" used herein includes any combination of words listed together with the term. For example, the expression "A or B" or "at least one of A and/or B" may indicate A, B, or both A and B.

The terms, such as "first", "second", and the like used herein may refer to various elements of various embodiments of the present disclosure, but do not limit the elements. For example, such terms do not limit the order and/or priority of the elements. Furthermore, such terms may be used to distinguish one element from another element. For example, "a first user device" and "a second user device" indicate different user devices. For example, without departing the scope of the present disclosure, a first element may be referred to as a second element, and similarly, a second element may be referred to as a first element.

In the description below, when one part (or element, device, etc.) is referred to as being "connected" to another part (or element, device, etc.), it should be understood that the former can be "directly connected" to the latter, or "electrically connected" to the latter via an intervening part (or element, device, etc.). It will be further understood that when one component is referred to as being "directly connected" or "directly linked" to another component, it means that no intervening component is present.

Terms used in this specification are used to describe embodiments of the present disclosure and are not intended to limit the scope of the present disclosure. The terms of a singular form may include plural forms unless otherwise specified.

Features, integers, characteristics, compounds, chemical moieties or groups described in conjunction with a particular aspect, embodiment or example of the present disclosure are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal sense unless expressly so defined herein in various embodiments of the present disclosure.

Electronic devices according to various embodiments of the present disclosure may include an electronic device having a shooting function. For example, the electronic devices may include at least one of smartphones, tablet personal computers (PCs), mobile phones, video telephones, electronic book readers, desktop PCs, laptop PCs, netbook computers, personal digital assistants (PDAs), portable multimedia players (PMPs), Motion Picture Experts Group (MPEG-1 or MPEG-2) Audio Layer 3 (MP3) players, mobile medical devices, cameras, wearable devices (e.g., head-mounted-devices (HMDs), such as electronic glasses), an electronic apparel, electronic bracelets, electronic necklaces, electronic appcessories, electronic tattoos, smart watches, and the like.

According to various embodiments of the present disclosure, the electronic devices may be smart home appliances including a sound output function. The smart home appliances may include at least one of, for example, televisions (TVs), digital versatile disc (DVD) players, audios, refrigerators, air conditioners, cleaners, ovens, microwave ovens, washing machines, air cleaners, set-top boxes, TV boxes (e.g., SAMSUNG HOMESYNC^{™}, APPLE TV^{™}, GOOGLETV^{™}, or the like), game consoles, electronic dictionaries, electronic keys, camcorders, electronic picture frames, and the like.

According to various embodiments of the present disclosure, the electronic devices may include at least one of the following devices having a shooting function: medical devices (e.g., a magnetic resonance angiography (MRA), a magnetic resonance imaging (MRI), a computed tomography (CT), scanners, and ultrasonic devices), navigation devices, global positioning system (GPS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), and points of sales (POSs).

According to various embodiments of the present disclosure, the electronic devices may include at least one of parts of furniture or buildings/structures having communication functions, electronic boards, electronic signature receiving devices, projectors, and measuring instruments (e.g., water meters, electricity meters, gas meters, and wave meters), each of which includes a shooting function. The electronic devices according to various embodiments of the present disclosure may be one or more combinations of the above-mentioned devices. Furthermore, the electronic devices according to various embodiments of the present disclosure may be flexible devices. It would be obvious to those skilled in the art that the electronic devices according to various embodiments of the present disclosure are not limited to the above-mentioned devices.

Hereinafter, electronic devices according to various embodiments of the present disclosure will be described with reference to the accompanying drawings. The term "user" used herein may refer to a person who uses an electronic device or may refer to a device (e.g., an artificial electronic device) that uses an electronic device.

FIG. 1 illustrates an example network environment 100 including an electronic device 101 according to various embodiments of the present disclosure.

As illustrated in FIG. 1, an electronic device 101 includes a bus 110, a processor 120, a memory 130, an input/output (I/O) interface 140, a display 150, a communication interface 160, and a camera module 170.

The bus 110 interconnecting the above-described components is a circuit for conveying communications (such as a control message) among the aforementioned components.

The processor 120 receives, for example, instructions from the aforementioned other components (such as the memory 130, the input/output interface 140, the display 150, the communication interface 160, the camera module 170, and the like) through the bus 110, and decodes the received instructions, and then performs data processing or operations according to the decoded instructions.

The processor 120 operates with at least two operating systems (such as a first operating system 135 and a second operating system 136). The processor 120 selectively drives a plurality of operating systems based on a specific condition, thereby improving the performance of the electronic device 101 or making it possible to manage power efficiently. When a lens module 175 is mounted, the processor 120 selects and drives an operating system specialized to take a picture, while the other operating systems are not driven and/or maintain a minimal power state. Afterwards, when the lens module 175 is removed, the processor 120 drives the other operating system that is convenient to use stored pictures.

According to various embodiments of the present disclosure, on the selected operating system (such as the first operating system 135 or the second operating system 136), the processor 120 turns on or off a function, that is associated with a shooting of a picture or video, based on whether the lens module 175 is removed or whether the lens module 175 is usable. In the case where the lens module 175 is removed, for example, the processor 120 makes it impossible to execute a function (such as picture shooting, video shooting, flash on/off, and the like) about camera shooting on a specific operating system (such as a tizen operating system) or removes (or hides) an icon for the execution of the function from the display 150.

In the case where the lens module 175 is mounted, the processor 120 automatically executes a function (such as picture shooting, video shooting, flash on/off, and the like) about camera shooting with a specific operating system (such as, a tizen operating system) or displays an icon for the execution of the function on the display 150 to allow a user to select the displayed icon.

According to various embodiments of the present disclosure, the processor 120 includes independent processors that drive a plurality of operating systems, respectively. For example, the processor 120 includes a first processor and a second processor. The first processor and the second processor are implemented independently of each other or correspond to processors operating independently. The first processor and the second processor drive the first operating system 135 and the second operating system, respectively. The first processor and the second processor are driven selectively, and, thus, the performance of device and/or power management efficiency is improved.

The memory 130 stores instructions or data received from the processor 120 or other components (such as the input/output interface 140, the display 150, the communication interface 160, the camera module 170, and the like) or generated by the processor 120 or the other components.

According to various embodiments of the present disclosure, the memory 130 includes, for example, programming modules such as a kernel 131, a middleware 132, an application programming interface (API) 133, an application 134, and the like. Each of the aforementioned programming modules are implemented in the form of a software, a firmware, a hardware, or a combination thereof.

The kernel 131 controls or manages system resources (such as the bus 110, the processor 120, the memory 130, and the like) that are used to execute operations or functions of remaining other programming modules, for example, the middleware 132, the API 133, or the application 134. Furthermore, the kernel 131 provides an interface that allows the middleware 132, the API 133, or the application 134 to access discrete components of the electronic device 101 so as to control or manage the middleware 132, the API 133, or the application 134.

The middleware 132 performs a mediation role such that the API 133 or the application 134 communicates with the kernel 131 to exchange data. Furthermore, with regard to task requests received from the application 134, for example, the middle ware 132 performs a control function (such as scheduling or load balancing) on a task request using a method of assigning the priority, that makes it possible to use a system resource (such as the bus 110, the processor 120, the memory 130, or the like) of the electronic device 101, to the at least one application 134.

The API 133 is an interface through which the application 134 controls a function provided by the kernel 131 or the middleware 132, and includes, for example, at least one interface or function (such as an instruction) for a file control, a window control, image processing, a character control, or the like.

According to various embodiments of the present disclosure, the application 134 includes a short messaging service/multimedia messaging service (SMS/MMS) application, an e-mail application, a calendar application, an alarm application, a health care application (such as an application for measuring an exercise amount, a blood sugar or the like), an environment information application (such as an application for providing air pressure, humidity, temperature information or the like) or the like. The application 134 is an application associated with information exchange between the electronic device 101 and an external device (such as an electronic device 102 or a server 103). The application associated with information exchange includes, for example, a notification relay application for transmitting specific information to an external device or a device management application for managing an external device.

For example, the notification relay application includes a function of transmitting notification information that arises from other applications (such as applications for SMS/MMS, e-mail, health care, or environmental information) of the electronic device 101, to an external electronic device (such as the electronic device 102). The notification relay application receives, for example, notification information from an external device (such as the electronic device 102 or the server 103) and provides the notification information to a user. The device management application manages (such as install, delete, or update), for example, at least one function (such as turn-on/turn-off of an external device itself (or a part of components) or adjustment of brightness (or resolution) of a display) of the external device (such as the electronic device 102 or the server 103) which communicates with the electronic device, an application running in the external device, or a service (such as a call service or a message service) provided from the external device.

According to an embodiment of the present disclosure, the application 134 includes an application which is assigned in accordance with an attribute (such as a kind of electronic device) of the external device (such as the electronic device 102 or the server 103). For example, in the case where the external device is an MP3 player, the application 134 includes an application associated with reproduction of music. Similarly, in the case where the external device is a mobile medical device, the application 134 includes an application associated with health management. According to an embodiment of the present disclosure, the application 134 includes at least one of an application specified to the electronic device 101 or an application received from the external device (such as, the electronic device 102 or the server 103).

According to various embodiments of the present disclosure, the memory 130 stores a program for driving the first operating system 135 and the second operating system 136. The first operating system 135 or the second operating system 136 are selectively activated according to a state of the electronic device 101 or a selection of a user, and, thus, the performance of device or power management efficiency are improved.

According to various embodiments of the present disclosure, the first operating system 135 is an operating system that uses images collected or stored through the camera module 170. In the case where a user selects a function (such as edition or transmission/reception of a captured image) associated with the use of a stored image, the processor 120 activates the first operating system 135. Furthermore, in the case where the execution of a function associated with the use of an image is predicted (such as detachment of the lens module 175), the processor 120 activates the first operating system 135 to allow a function to be executed efficiently or power to be used efficiently. However, the scope of the present disclosure are not limited thereto. For example, the first operating system 135 performs the following functions: picture shooting, changing of shooting information, and the like.

According to various embodiments of the present disclosure, the first operating system 135 is an operating system which drives various applications to use collected or stored images. For example, the first operating system 135 is the Google Android operating system or the Window operating system that is capable of driving various kinds of applications. The first operating system 135 is an operating system in which at least one of a loading time, an execution time, or a stabilization time of an application is longer than a corresponding time of the second operating system 136.

According to various embodiments of the present disclosure, if the electronic device 101 is powered up or reset, the first operating system 135 is activated to be faster than the second operating system 136. For example, if a user turns on the power of the electronic device 101, the first operating system 135 is firstly activated to allow the user to set a function such as camera setting, network setting, or the like.

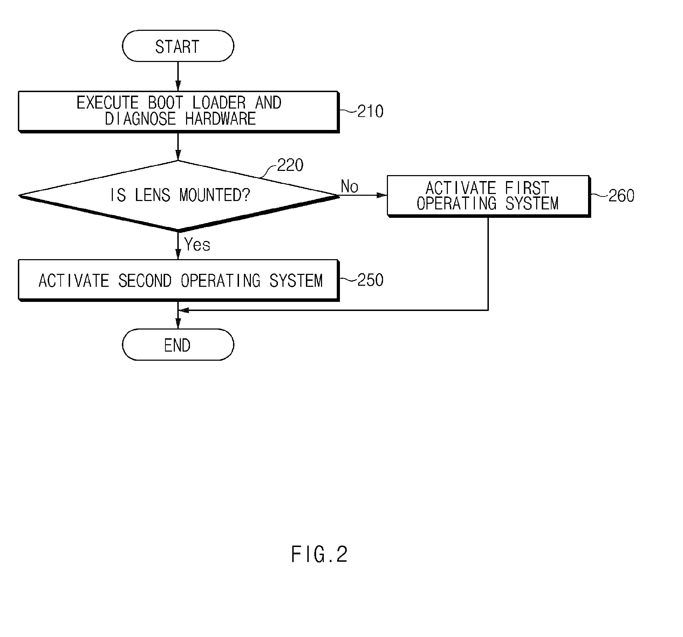

According to various embodiments of the present disclosure, the first operating system 135 is inactivated if the lens module 175 is mounted on the camera module 170 and is activated if the lens module 175 is separated from the camera module 170 (or the electronic device 101). Additional information associated with a change of an operating system through mounting of the lens module 175 is given with respect to FIGs. 2 to 8.

The second operating system 136 is an operating system that controls the camera module 170 to collect picture data. The processor 120 activates the second operating system 136 if a user selects a shooting function or the execution of the function is predicted (such as if the lens module 175 is mounted). However, the scope of the present disclosure is not limited thereto. For example, the second operating system 136 performs a function associated with the use of picture data such as picture edition, picture transmission, and the like.

According to various embodiments of the present disclosure, the second operating system 136 is activated if the lens module 175 is mounted on the electronic device 101 and is inactivated if the lens module 175 is detached from the electronic device 101. The second operating system 136 is an operating system of which the shooting speed is set to be faster than that of the first operating system 135 in the light of a characteristic of the camera module 170 such as the capturing of an instant image. According to various embodiments of the present disclosure, the second operating system 136 is an operating system that is capable of taking a picture or video over a specific shooting speed using the camera module 170. For example, the second operating system 136 is a real time OS (RTOS) or a tizen OS that is used to drive a digital camera and the like.

An embodiment of the inventive concept is exemplified in FIG. 1 as the electronic device 101 includes two operating systems. However, the scope of the present disclosure is not limited thereto. For example, the electronic device 101 is driven with a plurality of, for example, two or more operating systems.

The I/O interface 140 transmits an instruction or data, input from a user through an input/output device (such as a sensor, a keyboard, or a touch screen), to the processor 120, the memory 130, the communication interface 160, or the camera module 170, for example, through the bus 110. For example, the I/O interface 140 provides the processor 120 with user's touch data input through a touch screen. Furthermore, the I/O interface 140 outputs an instruction or data, received from the processor 120, the memory 130, the communication interface 160, or the camera module 170 through the bus 110, through the input/output device (such as a speaker or a display). For example, the I/O interface 140 outputs voice data processed through the processor 120 to the user through a speaker.

The display 150 displays a variety of information (such as multimedia data, text data, and the like) for the user. The display 150 displays a screen associated with the first operating system 135 or the second operating system 136. For example, the display 150 displays a user interface (UI) screen associated with the first operating system 135 or displays a screen including a shooting setting icon (such as a flash on/off icon, a picture pixel selection icon, and the like) associated with the second operating system 136.

The communication interface 160 establishes a communication between the electronic device 101 and an external device (such as the electronic device 102 or the server 103). For example, the communication interface 160 is connected to a network 162 through a wireless communication protocol or a wired communication protocol to communicate with the external device. The wireless communication includes at least one of, for example, wireless-fidelity (Wi-Fi), Bluetooth (BT), near field communication (NFC), global positioning system (GPS), or cellular communication protocol (such as long-term evolution (LTE), LTE-Advanced (LTE-A), code division multiple access (CDMA), wideband CDMA (WCDMA), universal mobile telecommunication system (UMTS), wireless broadband (WiBro), or global system for mobile communications (GSM)or the like). Furthermore, the communication interface 160 includes at least one of a universal serial bus (USB), a high definition multimedia interface (HDMI), a recommended standard 232 (RS-232), or a plain old telephone service (POTS).

According to various embodiments of the present disclosure, the communication interface 160 exchanges data, associated with a picture or video taken through the camera module 170, with the external device (such as the electronic device 102 or the server 103). Furthermore, the communication interface 160 additionally transmits association information that is capable of being displayed or processed together with the data.

According to an embodiment, the network 162 is a telecommunications network. The telecommunications network includes at least one of a computer network, an internet, an internet of things, or a telephone network. According to an embodiment of the present disclosure, a protocol (such as a transport layer protocol, a data link layer protocol, or a physical layer protocol) for a communication between the electronic device 101 and an external device is supported by at least one of the kernel 131, the middle ware 132, the application programming interface 133, the application 134, or the communication interface 160.

The camera module 170 is a device taking a picture or video. The camera module 170 includes one or more of the following components for shooting a picture or video: a lens, an optical device, a flash device, and the like. According to various embodiments of the present disclosure, the camera module 170 includes a default lens and is implemented to operate the lens module 175 separately mounted. The camera module 170 recognizes (or detects) whether the lens module 175 is mounted or a kind of mounted lens. Below, the lens module 175 is interpreted as including a lens basically mounted or additionally mounted on the camera module 170.

The lens module 175 is connected to the camera module 170 so as to be removable. For the shooting using the electronic device 101, the lens module 175 is connected to the camera module 170; otherwise (such as for no shooting), it is detached from the camera module 170 for keeping separately. The lens module 175 is implemented in various forms or kinds. A user selectively connects the lens module 175 to the camera module 170 based on a shooting manner or a shooting purpose. According to various embodiments of the present disclosure, the lens module 175 includes a separate lens cover. Even though the lens module 175 is connected to the camera module 170, the lens cover blocks light to allow shooting not to be performed. A sensor module 180 (such as an illuminance sensor and the like) recognizes whether the lens cover is coupled or not i.e. covering an opening of the lens module and blocking light from entering the lens module or not.

According to various embodiments of the present disclosure, the lens module 175 is recognized by the sensor module 180. The sensor module 180 includes a connection recognition sensor, an illuminance sensor, and the like and recognizes whether the lens module 175 is mounted or whether the lens module 175 is usable. Information recognized by the sensor module 180 is provided to the processor 120. The processor 120 changes an operating system based on the recognized information.

The sensor module 180 recognizes whether the lens module 175 is mounted or whether the lens module 175 is usable. The sensor module 180 includes a connection recognition sensor, an illuminance sensor, and the like and recognizes whether the lens module 175 is mounted or usable. For example, the sensor module 180 includes a connection recognition sensor (such as a pogo pin) and provides the processor 120 with information associated with whether the lens module 175 is mounted on the camera module 170. Alternatively, the sensor module 180 includes an illuminance sensor and provides the processor 120 with information about whether a lens cover coupled with the lens module 175 is detached therefrom to use the camera module 170.

The camera module 170, the lens module 175, and the sensor module 180 are separated according to a function, and some thereof are integrated and additionally separated. For example, the sensor module 180 is implemented in the form (such as a pogo pin or an illuminance sensor) of being included as a part of the camera module 170.

According to various embodiments of the present disclosure, an electronic device includes a camera module, a lens module removable from the camera module, a sensor module configured to recognize the lens module, and a processor configured to operate first and second operating systems. The processor selectively activates the first and second operating systems based on recognition information of the sensor module.

According to various embodiments of the present disclosure, the recognition information includes information about whether the lens module is attached or whether the lens module is usable. The sensor module includes a first sensor configured to recognize whether the lens module is attached, and a second sensor configured to recognize whether the lens module is usable.

According to various embodiments of the present disclosure, if the lens module is mounted and is useable, with the first operating system activated, the processor changes the first operating system into the second operating system. If the lens module is detached or is not useable, with the second operating system activated, the processor changes the second operating system into the first operating system.

According to various embodiments of the present disclosure, the first operating system is an operating system in which at least one of a loading time, an execution time, or a stabilization time of an application is longer than a corresponding time of the second operating system. The first operating system is an Android OS or a window OS and the second operating system is a real time OS (RTOS) or a tizen OS.

According to various embodiments of the present disclosure, if the lens module is mounted and is useable, with the first operating system activated, the processor maintains the first operating system based on a specific condition. If the lens module is detached or is not useable, with the second operating system activated, the processor maintains the second operating system based on a specific condition.

According to various embodiments of the present disclosure, the first operating system is driven by a first processor and the second operating system is driven by a second processor independent of the first processor. At least one of the first processor or the second processor is in a power management state in which a power of less than a specific value is consumed. The first processor is driven together with a first memory and the second processor is driven together with a second memory independent of the first memory.

According to various embodiments of the present disclosure, the electronic device further includes a memory that is accessible in common by the first operating system or the second operating system. The first or second operating system is driven by a boot loader, and the boot loader activates at least one of the first operating system or the second operating system based on a usable state of the lens module.

According to various embodiments of the present disclosure, a camera device includes a lens module, a sensor module configured to recognize a state of the lens module, and a processor configured to operate first and second operating systems. The processor selectively activates the first and second operating systems based on recognition information of the sensor module.

FIG. 2 illustrates an example procedure 200 for driving a plurality of operating systems according to various embodiments of the present disclosure.

As illustrated in FIG. 2, if the electronic device 101 is powered up or is reset, in operation 210, the processor 120 executes a boot loader stored at the memory 130. The boot loader is a program that initializes hardware components included in the electronic device 101 and performs self-diagnosis.

In operation 220, the boot loader checks whether the lens module 175 is mounted or whether the lens module 175 is usable, through the sensor module 180. For example, the sensor module 180 provides the boot loader with information about whether a physical pin (such as a pogo pin) disposed at a lens connection portion is pressed due to mounting of the lens module 175 or whether a lens is recognizable through a near field communication (NFC) module.

If the lens module 175 is determined as being mounted, in operation 230, the boot loader activates the second operating system 136 and inactivates the first operating system 135. The inactivation means that a program associated with a corresponding operating system is stored at a volatile memory (RAM) and the program is performed if a specific control signal is received. Hereinafter, the term "inactivation" will be identically applied to the following description. According to various embodiments of the present disclosure, the processor 120 may include a first processor driving the first operating system 135 and a second processor driving the second operating system 136. In the case where the first operating system 135 is inactivated, the first processor may enter a power management state or a minimal power state in which power of less than a specific value is consumed. Here, the power management state or the minimal power state may mean a deep sleep state in which a speed of a clock driving a corresponding processor is minimized and wake-up is performed according to a specific control signal. Hereinafter, the term "power management state or minimal power state" will be identically applied to the following description.

According to various embodiments of the present disclosure, the second operating system 136 controls the camera module 170 to take a picture or video. The second operating system 136 maintains a fast shooting speed to capture an instant image. However, the scope of the present disclosure is not limited thereto. For example, the second operating system 136 performs the following function based on a specific condition: picture edition, picture transmission, or the like.

If the lens module 175 is determined as being not mounted, in operation 240, the boot loader activates the first operating system 135 and inactivates the second operating system 136. According to various embodiments of the present disclosure, the processor 120 includes a first processor driving the first operating system 135 and a second processor driving the second operating system 136. In the case where the second operating system 136 is inactivated, the second processor enters the power management state or the minimal power state in which power of less than a specific value is consumed.

According to various embodiments of the present disclosure, the first operating system 135 is an operating system that is suitable for using an image collected or stored through the camera module 170. For example, the first operating system 135 performs editing of a captured image or sending of an image to an external device. However, the scope of the present disclosure is not limited thereto. The first operating system 135 may perform a picture shooting function based on a specific condition. According to various embodiments of the present disclosure, the first operating system 135 performs general functions (such as an internet connection, a game, and the like) executed on the electronic device 101.

According to various embodiments of the present disclosure, the first operating system 135 or the second operating system 136 displays a button for a change of an operating system on the display 150. A user touches the button and changes an operating system regardless whether the lens module 175 is mounted.

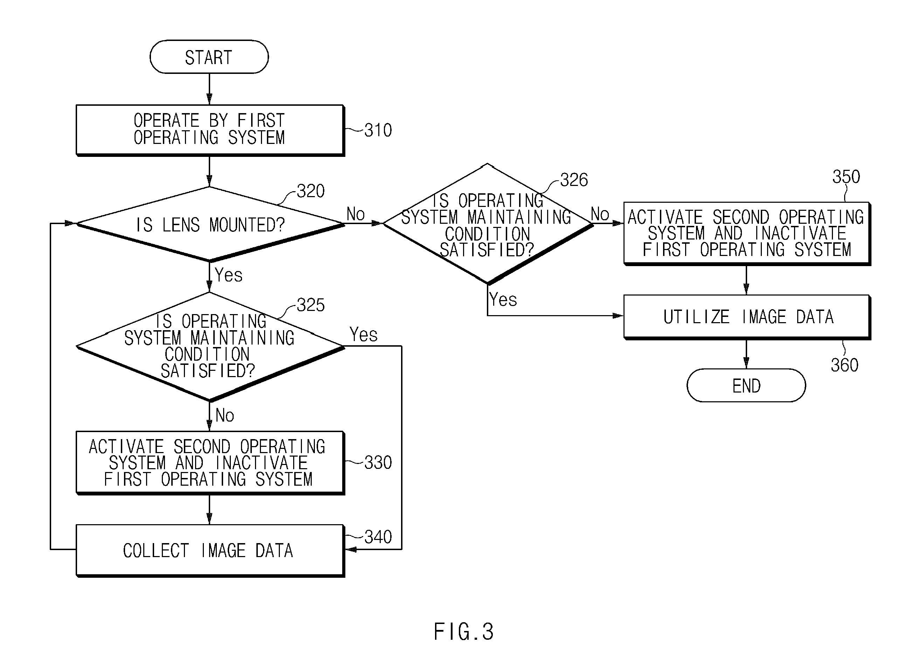

FIG. 3 illustrates an example procedure 300 according to various embodiments of the present disclosure.

As illustrated in FIG. 3, in operation 310, the electronic device 101 is operated by the first operating system 135. The first operating system 135 is selectively activated according to a selection of a user or a specific condition. For example, the first operating system 135 is activated if the electronic device 101 is powered up or is reset. Alternatively, in the case where the electronic device 101 is turned off and is then turned on, the first operating system 135 that was activated at a turn-off point in time is activated again.

In operation 320, the first operating system 135 (or the second operating system 136 if currently activated instead of the first operating system 135) checks whether the lens module 175 is mounted (or such as whether the lens module 175 is usable), through the sensor module 180.

According to various embodiments of the present disclosure, in operation 325 and operation 326, the first operating system 135 (or the second operating system 136 if currently activated) checks whether an operating system maintaining condition is satisfied. The operating system maintaining condition is the condition that a current operating system is maintained according to a specific condition even though the lens module 175 is mounted or detached and the operating system would normally be changed in response to the mounting or detachment of the lens module 175.

For example, the processor 120 maintains the first operating system 135 with respect to the following case even though the lens module 175 is mounted: 1) the case that the first operating system 135 uses the camera module 170, 2) the case that a shooting speed or a data processing speed is over a specific speed, 3) the case that there is captured a picture of which the resolution is less than a specific resolution, 4) the case that shooting is made in a specific mode, 5) the case that there are taken pictures of which the number is less than a specific number, or 6) the case that a user selects maintaining of an operating system.

Alternatively, the processor 120 maintains the second operating system 136 with respect to the following case even though the lens module 175 is not mounted: 1) the case that picture data is transmitted in a specific communication method (such as BT communication), 2) the case that a picture is edited in a specific mode, 3) the case that there are transmitted pictures of which the number is within a specific number, or 4) the case that a user selects maintaining of an operating system.

In the case where the lens module 175 is mounted and is usable (such as in the case where a lens cover is not coupled), the first operating system 135 is active and an operating system maintaining condition is not satisfied, in operation 330, the second operating system 136 is activated and the first operating system 135 is inactivated. Alternatively, in the case where the lens module 175 is mounted and is usable, the second operating system 136 is active and the operating system maintaining condition is satisfied, the second operating system 136 is continuously activated (i.e. maintained) and the first operating system 135 is inactivated (i.e. not activated). In the case where the lens module 175 is mounted and usable, the first operating system 135 is active, and an operating system maintaining condition is not satisfied, the first operating system 135 drives the second operating system 136 and enters an inactive state without intervention of any other component (i.e. the second operating system 136 is activated and the first operating system 135 deactivated).

In operation 340, the second operating system 136 collects image data through the camera module 170 and the mounted lens module 175. The camera module 170 takes a picture or video and stores data, that is, the taken picture or video. If the operating system maintaining condition is satisfied, the first operating system 135 collects image data through the camera module 170 and the mounted lens module 175. The activated first operating system 135 or second operating system 136 continuously checks whether the lens module 175 is detached or is usable, through the sensor module 180 while shooting is being performed.

In the case where the lens module 175 is not mounted or in the case where the lens module 175 is unusable even though mounted (such as in the case where a lens cover is coupled), the first operating system 135 is active, and an operating system maintaining condition is not satisfied, in operation 350, the first operating system 135 is inactivated and the second operating system 136 is activated. Alternatively, in the case where the lens module 175 is detached, the first operating system 135 is active, and an operating system maintaining condition is satisfied, the first operating system 135 is continuously activated and the second operating system 136 is continuously inactivated. In the case where the lens module 175 is detached, the second operating system 136 is active, and an operating system maintain condition is not satisfied, the second operating system 136 drives the first operating system 135 and enters an inactive state without intervention of any other component (i.e. the first operating system 135 is activated and the second operating system 136 is deactivated).

In operation 360, the first operating system 135 uses stored picture or video data. For example, the first operating system 135 executes various applications that convert or edit data of a captured picture or video. The first operating system 135 transmits the converted data to an external device (such as the electronic device 102 or the server 103). For example, the first operating system 135 transmits stored picture or video data to the external device through a messenger app (such as KakaoTalk, Band, Hangout, or the like) or an SNS app (such as Twitter, Facebook, or the like). According to various embodiments of the present disclosure, in the case where the second operating system 136 is active and the operating system maintaining condition is satisfied, the electronic device 101 uses the stored picture or image data through the second operating system 136. For example, the second operating system 136 transmits the stored picture data to the external device, connected with the electronic device 101, using Bluetooth communication.

According to various embodiments of the present disclosure, a method for operating an electronic device that includes a camera module includes recognizing a shooting-possible state of the camera module, and selectively activating first and second operating systems based on information about the shooting-possible state i.e. whether the lens modules may currently be used to take a photograph.

According to various embodiments of the present disclosure, the recognizing includes detecting at least one of whether the lens module is mounted or whether the lens module is usable. The detecting includes checking whether a lens cover is coupled.

According to various embodiments of the present disclosure, the selective activating includes activating the second operating system if a processor determines that a camera function is performed. The selective activating includes checking an operating system maintaining condition based on a change in the shooting-possible state, with the first or second operating system activated. The selective activating includes changing an operating system based on a change in the shooting-possible state, with the first or second operating system activated.

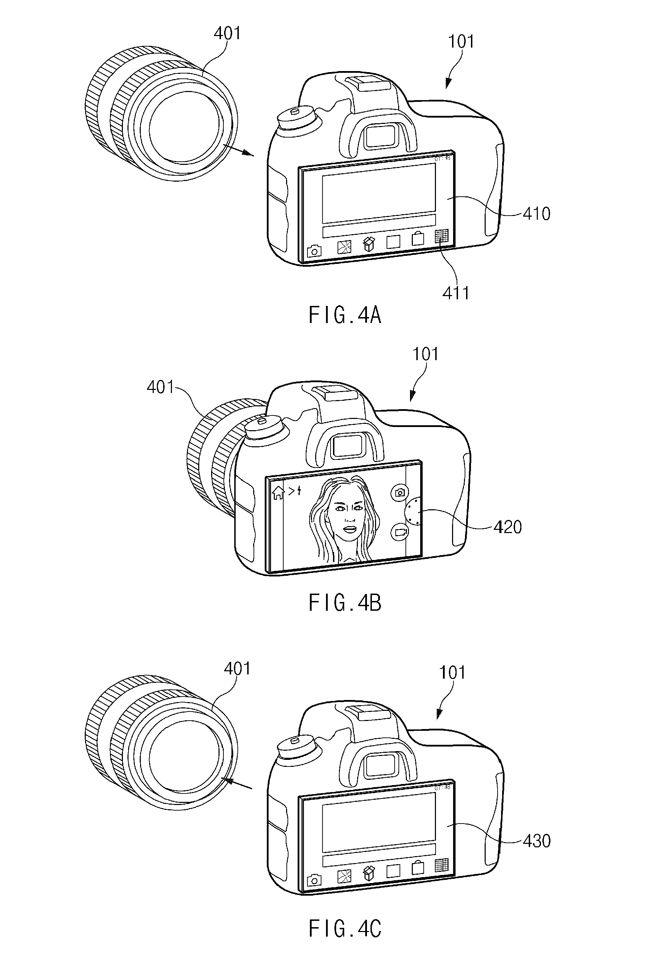

FIGs. 4A, 4B, and 4C illustrates a change in a display 400 when a lens module is attached and detached to or from an electronic device according to various embodiments of the present disclosure.

As illustrated in FIG. 4A, the first operating system 135 is activated, with a lens module 401 not mounted. The first operating system 135 is an operating system that uses images collected or stored through the camera module 175 or performs various functions (such as an internet connection, a game, and the like) associated with a general operation of the electronic device 101. For example, based on an application, the first operating system 135 edits a stored picture or video or transmits it to an external device (such as the electronic device 102 or the server 103). Furthermore, the first operating system 135 executes various applications performing functions such as an internet connection, a game, and the like. The first operating system 135 displays an execution button (or icon) 411 on a display 410 for executing the various applications.

As illustrated in FIG. 4B, the second operating system 136 is activated if the lens module 401 is mounted on the electronic device 101. If recognizing that the lens module 401 is mounted, the first operating system 135 operates the second operating system 136 and enters an inactive state without intervention with any other components. The second operating system 136 controls the camera module 170 to take and store a picture or video. The second operating system 136 is a real-time OS (RTOS) or a tizen OS that is used to drive a digital camera and the like.

The second operating system 136 displays setting buttons or icons for setting various functions of a camera on a display 420. For example, the second operating system 136 displays an icon for flash setting, a shooting mode, selection of shooting quality, and the like on the display 420.

According to various embodiments of the present disclosure, the second operating system 136 recognizes whether the lens module 401 is mounted, in various manners. For example, the second operating system 136 recognizes the lens module 401 through a pogo pin that is located at a portion where the lens module 401 is mounted. The second operating system 136 determines whether the lens module 401 is mounted, based on whether the pogo pin is pressed. Furthermore, the second operating system 136 recognizes whether or not of mounting or a kind of the lens module 401 through a local area network module (such as SPI, NFC, and the like) included in the lens module 401.

As illustrated in FIG. 4C, in the case where the lens module 401 is removed from the electronic device 101, the first operating system 135 is activated again. If recognizing that the lens module 401 is removed, the second operating system 136 operates the first operating system 135 and enters an inactive state without intervention of any other components. The first operating system 135 uses collected picture or video data.

According to various embodiments of the present disclosure, even though the lens module 401 is mounted, or removed on or from the electronic device 101, the electronic device 101 does not change an operating system. For example, in the case where the lens module is mounted, the first operating system 135 is active, and an operating system maintaining condition is satisfied, the electronic device 101 collects image data through the first operating system 135. Furthermore, in the case where the lens module is not mounted, the second operating system 136 is active and the operating system maintaining condition is satisfied, the electronic device 101 uses stored picture or video data through the second operating system 136.

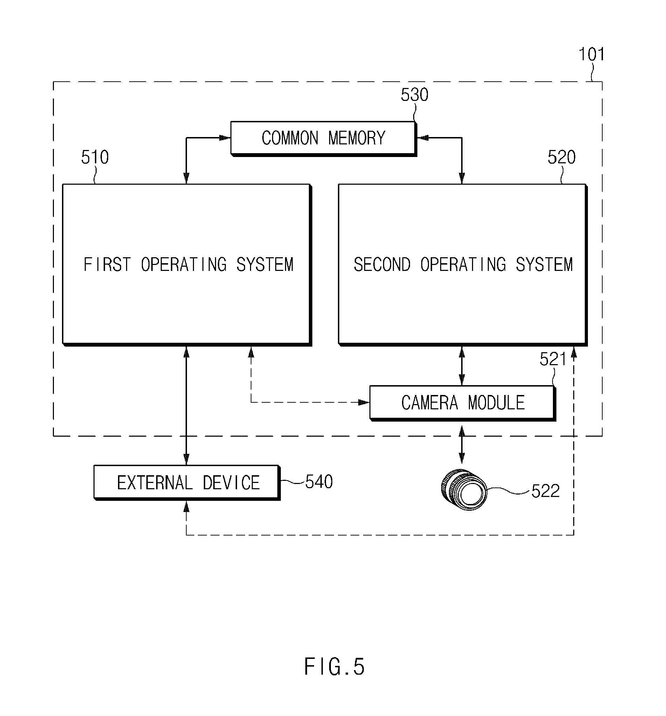

FIG. 5 illustrates an example of an electronic device 500 according to various embodiments of the present disclosure.

As illustrated in FIG. 5, the electronic device 101 includes a first operating system 510, a second operating system 520, a camera module 521, and a common memory 530. The first operating system 510 or the second operating system 520 is driven independently. The first operating system 510 or the second operating system 520 is selectively driven according to a condition such as attachment or detachment of the lens module 522.

The electronic device 101 includes the common memory 530 that the first operating system 510 or the second operating system 520 accesses in common. The common memory 530 stores data of a picture or video captured by the camera module 521. The common memory 530 is implemented in the form of a nonvolatile memory or a volatile memory. Furthermore, the common memory 530 is implemented in the form of a temporary buffer.

The first operating system 510 fetches picture or video data stored at the common memory 530. The first operating system 510 edits the fetched data or transmits the fetched data to an external device 540. The first operating system 510 executes various applications and processes or converts a picture or video. For example, the first operating system 135 transmits stored picture or video data to the external device 540 through a messenger app (such as KaKaoTalk, Band, hangout, and the like) or an SNS app (such as Twitter, Facebook, and the like).

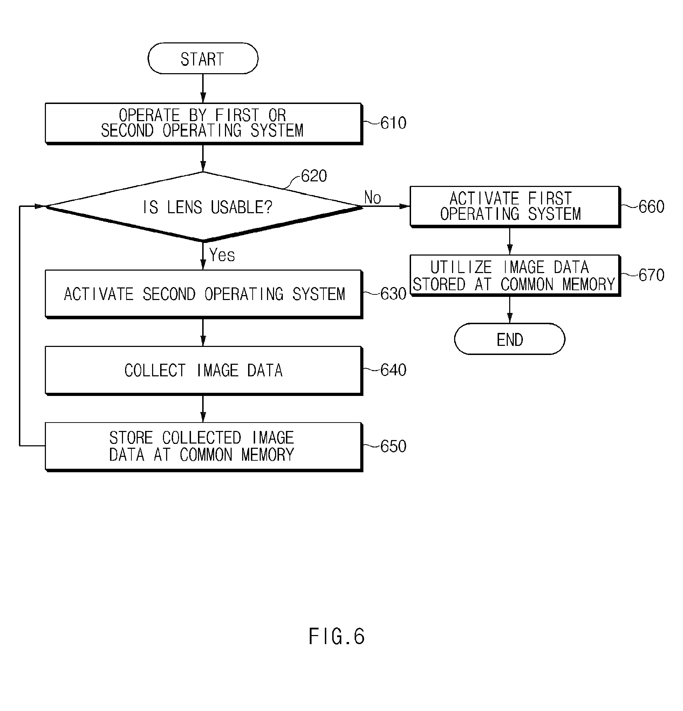

The second operating system 520 collects picture or video data through the camera module 521 and stores the collected picture or video at the common memory 530. The second operating system 520 has fast operating characteristics so as to increase an operating speed of the camera module 521. The second operating system 520 is activated when the electronic device 101 performs a shooting function and is inactivated when the shooting function is terminated. Information about an operation of the first or second operating system 510 or 520 using the common memory 530 will be given in FIG. 6.

According to various embodiments of the present disclosure, the electronic device 101 does not change an operating system even though the lens module 522 is mounted or removed. For example, in the case where the first operating system 510 is active, the lens is mounted and an operating system maintaining condition is satisfied, the electronic device 101 collects image data through the first operating system 510. Furthermore, in the case where the second operating system 520 is active, the lens is not mounted and the operating system maintaining condition is satisfied, the electronic device 101 uses stored picture or video data through the second operating system 520. For example, the second operating system 136 transmits the stored picture data to an external electronic device connected therewith, using Bluetooth communication.

FIG. 6 illustrates an example of a first or second operating system 600 according to various embodiments of the present disclosure.

As illustrated in FIG. 6, in operation 601, the electronic device 101 operates based on a first operating system 510 or a second operating system 520. The first operating system 510 or the second operating system 520 is selectively activated according to a selection of a user or a specific condition. For example, in the case of intending to manage a picture or video, a user selects and drives the first operating system 510; in the case of intending to take a picture or video, the user selects and drives the second operating system 520.

In operation 620, the first operating system 510 or the second operating system 520 checks whether the lens module 522 is usable (i.e. mounted and the lens cover not coupled), through the camera module 521. In the case where the camera module 521 recognizes mounting of the lens module 522 based on whether there is pressed a physical pin (such as a pogo pin) disposed at a connection portion of the lens module 522, the camera module 521 provides the recognized information to the first operating system 510 or the second operating system 520.

In operation 630, in the case where the lens module 522 is mounted and is usable (such as in the case where a lens cover is not coupled), the second operating system 520 is activated, while the first operating system 510 is inactivated.

In operation 640, the second operating system 520 collects image data through the camera module 521 and the mounted lens module 522. The camera module 521 takes a picture or video.

In operation 650, the second operating system 520 stores the collected image data at the common memory 530. The second operating system 520 continuously checks whether the lens module 522 is detached or is usable, while taking a picture or video.

In operation 660, in the case where the lens module 522 is not mounted or in the case where the lens module 522 is unusable even though mounted (such as in the case where the lens cover is coupled), the first operating system 510 is activated, while the second operating system 520 is inactivated.

In operation 670, the first operating system 510 uses image data stored at the common memory 530. For example, the first operating system 510 fetches picture or video data stored at the common memory 540 and converts or edits the fetched picture or video data. The first operating system 510 transmits the converted data to the external device 540.

According to various embodiments of the present disclosure, the electronic device 101 does not change an operating system even though the lens module 522 is mounted or removed. For example, in the case where the first operating system 510 is active, the lens module is mounted and an operating system maintaining condition is satisfied, through the first operating system 510, the electronic device 101 collects image data and stores the collected image data at the common memory 530. Alternatively, in the case where the second operating system 520 is active, the lens modules is not mounted and or not usable and the operating system maintaining condition is satisfied, the electronic device 101 uses picture or video data stored at the common memory 530 through the second operating system 520.

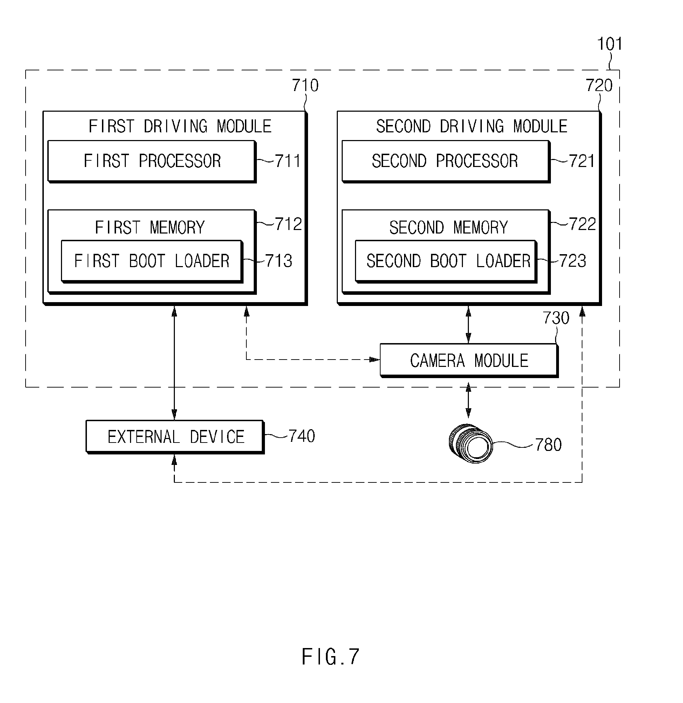

FIG. 7 illustrates an example of an electronic device 700 including hardware components for driving a first operating system and a second operating system according to various embodiments of the present disclosure.

As illustrated in FIG. 7, the electronic device 101 includes a first driving module 710 and a second driving module 720. The first and second driving modules 710 and 720 are hardware modules for driving the first and second operating systems 135 and 136, respectively.

The first driving module 710 includes a first processor 711 and a first memory 712. The first memory 712 includes a first boot loader 713 for starting the first operating system 135. Similarly, the second driving module 720 includes a second processor 721 and a second memory 722. The second memory 722 includes a second boot loader 723 for starting the second operating system 136.

If the electronic device 101 is powered on or is reset, the first processor 711 and the second processor 721 are driven independently. The first processor 711 executes the first boot loader 713 and performs hardware diagnosis or kernel load for execution of the first operating system 135. The second processor 721 executes the second boot loader 723 and performs hardware diagnosis or kernel load for execution of the second operating system 136.

Each of the first boot loader 713 and the second boot loader 723 check whether a lens module 780 is mounted, through a camera module 730. In the case where the lens module 780 is mounted, the first boot loader 713 inactivates the first operating system 135; in the case where the lens module 780 is not mounted, the first boot loader 713 activates the first operating system 135. In the case where the lens module 780 is mounted, the second boot loader 723 activates the second operating system 136; in the case where the lens module 780 is not mounted, the second boot loader 723 inactivates the second operating system 136.

According to various embodiments of the present disclosure, the first driving module 710 is implemented to be independent of part(s) or module(s) (such as an optical device, a flash device, and the like) associated with a shooting function of a camera. The first driving module 710 drives the first operating system 135 that is used to use an image or manage the electronic device 101, wherein the first driving module 710 is independent of part(s) or module(s) that is needed for a shooting function of a camera.

According to various embodiments of the present disclosure, the second driving module 720 is implemented to be connected with a part(s) or module(s) associated with a shooting function of a camera and is implemented to be independent of part(s) or module(s) for management or external communication of the electronic device 101. For example, the second driving module 720 is independent of a communication module (such as Wi-Fi module, a Bluetooth module, and the like) for a communication with the external device 740.

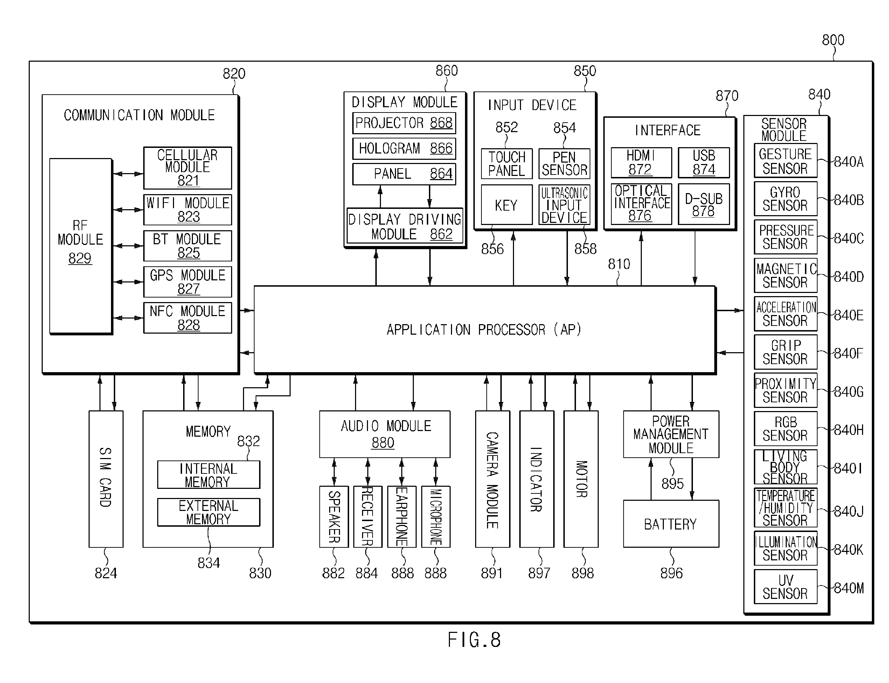

FIG. 8 illustrates an example of an electronic device 800 according to various embodiments of the present disclosure. An electronic device 800 includes the whole or a part of an electronic device 101 illustrated in FIG. 1.

As illustrated in FIG. 8, an electronic device 800 includes one or more application processors (AP) 810, a communication module 820, a subscriber identification module (SIM) card 824, a memory 830, a sensor module 840, an input device 850, a display 860, an interface 870, an audio module 880, a camera module 891, a power management module 895, a battery 896, an indicator 897, and a motor 898.

The AP 810 drives an operating system (OS) or an application to control a plurality of hardware or software components connected to the AP 810, processes, and computes a variety of data including multimedia data. The AP 810 is implemented with a System on Chip (SoC), for example. According to an embodiment of the present disclosure, the AP 810 further includes a graphic processing unit (GPU) (not illustrated in FIG. 8).

The communication module 820 (such as the communication interface 160) transmits and receives data when there are conveyed communications between other electronic devices (such as the electronic device 102) connected with the electronic device 801 (such as the electronic device 101) through a network. According to an embodiment of the present disclosure, the communication module 820 includes a cellular module 821, a wireless-fidelity (Wi-Fi) module 823, a Bluetooth (BT) module 825, a global positioning system (GPS) module 827, a near field communication (NFC) module 828, and a radio frequency (RF) module 829.

The cellular module 821 provides a voice communication, a video communication, a character service, an Internet service or the like through a communication network (such as an LTE, an LTE-A, a CDMA, a WCDMA, a UMTS, a WiBro, a GSM, or the like). Also, the cellular module 821 performs discrimination and authentication of an electronic device within a communication network using a subscriber identification module (such as a SIM card 824), for example. According to an embodiment of the present disclosure, the cellular module 821 performs at least a portion of functions that the AP 810 provides. For example, the cellular module 821 performs at least a portion of a multimedia control function.

According to an embodiment of the present disclosure, the cellular module 821 includes a communication processor (CP). Also, the cellular module 821 is implemented with, for example, a SoC. Although components such as the cellular module 821 (such as a communication processor), the memory 830, the power management module 895, and the like are illustrated as being components independent of the AP 810, the AP 810 is implemented to include at least a portion (such as a cellular module 821) of the above components.

According to an embodiment of the present disclosure, the AP 810 or the cellular module 821 (such as a communication processor) loads and processes an instruction or data received from nonvolatile memories respectively connected thereto or from at least one of other elements at the nonvolatile memory. Also, the AP 810 or the cellular module 821 stores data received from at least one of other elements or generated by at least one of other elements at a nonvolatile memory.

Each of the Wi-Fi module 823, the BT module 825, the GPS module 827, and the NFC module 828 includes a processor for processing data exchanged through a corresponding module, for example. In FIG. 8, an embodiment of the present disclosure is exemplified as the cellular module 821, the Wi-Fi module 823, the BT module 825, the GPS module 827, and the NFC module 828 are separate blocks, respectively. According to an embodiment of the present disclosure, at least a portion (such as two or more components) of the cellular module 821, the Wi-Fi module 823, the BT module 825, the GPS module 827, and the NFC module 828 are included within one Integrated Circuit (IC) or an IC package. For example, at least a portion (such as a communication processor corresponding to the cellular module 821 and a Wi-Fi processor corresponding to the Wi-Fi module 823) of communication processors corresponding to the cellular module 821, the Wi-Fi module 823, the BT module 825, the GPS module 827, and the NFC module 828 are implemented with one SoC.

The RF module 829 transmits and receives data, for example, an RF signal. Although not illustrated in FIG.8, the RF module 829 includes a transceiver, a power amplifier module (PAM), a frequency filter, or low noise amplifier (LNA). Also, the RF module 829 further includes the following part for transmitting and receiving an electromagnetic wave over a wireless communication channel: a conductor or a conducting wire. As illustrated in FIG. 8, an embodiment of the present disclosure is exemplified as the cellular module 821, the Wi-Fi module 823, the BT module 825, the GPS module 827, and the NFC module 828 are implemented to share one RF module 829. According to an embodiment of the present disclosure, at least one of the cellular module 821, the Wi-Fi module 823, the BT module 825, the GPS module 827, or the NFC module 828 transmits and receives an RF signal through a separate RF module.

The SIM card 824 is a card that includes a subscriber identification module and inserted to a slot formed at a specific position of the electronic device. The SIM card 824 includes unique identify information (such as integrated circuit card identifier (ICCID)) or subscriber information (such as integrated mobile subscriber identity (IMSI)).

The memory 830 (such as the memory 130) includes an embedded (or internal) memory 832 or an external memory 834. For example, the embedded memory 832 includes at least one of a volatile memory (such as a dynamic random access memory (DRAM), a static RAM (SRAM), or a synchronous DRAM (SDRAM)) and a nonvolatile memory (such as a one-time programmable read only memory (OTPROM), a programmable ROM (PROM), an erasable and programmable ROM (EPROM), an electrically erasable and programmable ROM (EEPROM), a mask ROM, a flash ROM, a NAND flash memory, or a NOR flash memory).

According to an embodiment of the present disclosure, the internal memory 832 is a solid state drive (SSD). The external memory 834 includes a flash drive, for example, compact flash (CF), secure digital (SD), micro secure digital (Micro-SD), mini secure digital (Mini-SD), extreme digital (xD) or a memory stick. The external memory 834 is functionally connected to the electronic device 801 through various interfaces. According to an embodiment of the present disclosure, the electronic device 801 further includes a storage device (or a storage medium), such as a hard drive.

The sensor module 840 measures a physical quantity or detects an operation state of the electronic device 801. The sensor module 840 converts the measured or detected information to an electric signal. The sensor module 840 includes at least one of a gesture sensor 840A, a gyro sensor 840B, a pressure sensor 840C, a magnetic sensor 840D, an acceleration sensor 840E, a grip sensor 840F, a proximity sensor 840G, a color sensor 840H (such as red, green, blue (RGB) sensor), a living body sensor 840I, a temperature/humidity sensor 840J, an illuminance sensor 840K, or an UV sensor 840M. Although not illustrated, additionally or generally, the sensor module 840 further includes, for example, an E-nose sensor, an electromyography sensor (EMG) sensor, an electroencephalogram (EEG) sensor, an electrocardiogram (ECG) sensor, a photoplethysmographic (PPG) sensor, an infrared (IR) sensor, an iris sensor, a fingerprint sensor, and the like. The sensor module 840 further includes a control circuit for controlling at least one or more sensors included therein.

The input device 850 includes a touch panel 852, a (digital) pen sensor 854, a key 856, or an ultrasonic input unit 858. The touch panel 852 recognizes a touch input using at least one of capacitive, resistive, infrared and ultrasonic detecting methods. Also, the touch panel 852 further includes a control circuit. In the case of using the capacitive detecting method, a physical contact recognition or proximity recognition is allowed. The touch panel 852 further includes a tactile layer. In this case, the touch panel 852 provides a tactile reaction to a user.

The (digital) pen sensor 854 is implemented in a similar or same manner as the method of receiving a touch input of a user or implemented using an additional sheet for recognition. The key 856 includes, for example, a physical button, an optical key, a keypad, and the like. The ultrasonic input device 858, that is an input device for generating an ultrasonic signal, enable the electronic device 801 to sense detect a sound wave through a microphone (such as a microphone 888) so as to identify data, wherein the ultrasonic input device 858 is capable of wireless recognition. According to an embodiment the present disclosure, the electronic device 801 uses the communication module 820 so as to receive a user input from an external device (such as a computer or server) connected to the communication module 820.

The display 860 (such as, the display 150) includes a panel 862, a hologram device 864, or a projector 866. The panel 862 is, for example, a liquid crystal display (LCD), an active matrix organic light-emitting diode (AM-OLED, or the like. The panel 862 is, for example, flexible, transparent or wearable. The panel 862 and the touch panel 852 are integrated into a single module. The hologram device 864 displays a stereoscopic image in a space using a light interference phenomenon. The projector 866 projects light onto a screen so as to display an image. The screen is arranged in the inside or the outside of the electronic device 801. According to an embodiment of the present disclosure, the display 860 further includes a control circuit for controlling the panel 862, the hologram device 864, or the projector 866.

The interface 870 includes, for example, an HDMI (high-definition multimedia interface) 872, a USB (universal serial bus) 874, an optical interface 876, or a D-sub (D-subminiature) 878. The interface 870 is included, for example, in a communication module 160 illustrated in FIG. 1. The interface 870 includes, for example, a mobile high definition link (MHL) interface, a SD card/multi-media card (MMC) interface, or an infrared data association (IrDA) standard interface.

The audio module 880 converts a sound and an electric signal in dual directions. At least a portion of the audio module 880 is included, for example, in an input/output interface 140 illustrated in FIG. 1. The audio module 880 processes, for example, sound information that is input or output through a speaker 882, a receiver 884, an earphone 886, or a microphone 888.

According to an embodiment of the present disclosure, the camera module 891 for shooting a still image or a video includes at least one image sensor (such as a front sensor or a rear sensor), a lens (not illustrated in FIG. 8), an image signal processor (ISP, not illustrated in FIG.8), or a flash (e.g., an LED or a xenon lamp, not illustrated in FIG.8).

The power management module 895 manages power of the electronic device 801. Although not illustrated in FIG.8, a power management integrated circuit (PMIC) a charger IC, or a battery or fuel gauge is included in the power management module 895.

The PMIC is mounted on an integrated circuit or a SoC semiconductor. A charging method is classified into a wired charging method and a wireless charging method. The charger IC charges a battery, and prevents an overvoltage or an overcurrent from being introduced from a charger. According to an embodiment of the present disclosure, the charger IC includes a charger IC for at least one of the wired charging method and the wireless charging method. The wireless charging method includes, for example, a magnetic resonance method, a magnetic induction method or an electromagnetic method, and includes an additional circuit, for example, a coil loop, a resonant circuit, or a rectifier, and the like.

The battery gauge measures, for example, a remaining capacity of the battery 896 and a voltage, current or temperature thereof while the battery is charged. The battery 896 stores or generates electricity, and supplies power to the electronic device 801 using the stored or generated electricity. The battery 896 includes, for example, a rechargeable battery or a solar battery.

The indicator 897 displays a specific state of the electronic device 801 or a portion thereof (such as, the AP 810), such as a booting state, a message state, a charging state, and the like. The motor 898 converts an electrical signal into a mechanical vibration. Although not illustrated, a processing device (such as a GPU) for supporting a mobile TV may be included in the electronic device 801. The processing device for supporting a mobile TV processes media data according to the standards of DMB, digital video broadcasting (DVB) or MediaFlo^{™}.

Each of the above-mentioned elements of the electronic device according to various embodiments of the present disclosure may be configured with one or more components, and the names of the elements may be changed according to the type of the electronic device. The electronic device according to various embodiments of the present disclosure may include at least one of the above-mentioned elements, and some elements may be omitted or other additional elements may be added. Furthermore, some of the elements of the electronic device according to various embodiments of the present disclosure may be combined with each other so as to form one entity, so that the functions of the elements may be performed in the same manner as before the combination.

The term "module" used herein may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, that are known or will be developed.

At least a portion of an apparatus (such as modules or functions thereof) or a method (such as operations) according to various embodiments of the present disclosure may be, for example, implemented by instructions stored in a computer-readable storage media in the form of a program module. The instruction, when executed by one or more processors (such as a processor 180), may cause the one or more processors to perform a function corresponding to the instruction. The computer-readable storage media, for example, may be the memory 830. At least a part of the programming module may be implemented with, for example, the processor 810. At least a part of the programming module may include, for example, a module, a program, a routine, a set of instructions, or a processor for performing one or more functions.

A computer-readable storage media may include a hard disk, a magnetic media, a floppy disk, a magnetic media, an optical media (such as a compact disc read only memory (CD-ROM) and a digital versatile disc (DVD)), a magneto-optical media (such as a floptical disk), and hardware devices (e.g., a read only memory (ROM), a random access memory (RAM), or a flash memory) configured to store and perform a program instruction (such as a programming module). Also, a program instruction may include not only a mechanical code such as things generated by a compiler but also a high-level language code executable on a computer using an interpreter. The above hardware unit may be configured to operate via one or more software modules for performing an operation of the present disclosure, and vice versa.

According to various embodiments of the present disclosure, in a non-transitory computer-readable storage medium recorded with an instruction capable of controlling an operation of an electronic device including a camera module, the instruction may cause the electronic device to perform recognizing a shooting-possible state of the camera module and selectively activating first and second operating systems based on information about the shooting-possible state.

A module or a programming module according to various embodiments of the present disclosure may include at least one of the above elements, or a portion of the above elements may be omitted, or additional other elements may be further included. Operations performed by a module, a programming module, or other elements according to various embodiments of the present disclosure may be executed sequentially, in parallel, repeatedly, or in a heuristic method. Also, a portion of operations may be executed in different sequences, omitted, or other operations may be added.

As described above, various embodiments of the present disclosure may recognize whether a lens is mounted and may efficiently change an operating system.

Various embodiments of the present disclosure may independently drive an operating system fit to each function of an electronic device without depending on a specific operating system.

Various embodiments of the present disclosure may selectively change an operating system, performing various functions, based on whether a lens is mounted, thereby improving power efficiency and making it possible to perform functions efficiently.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for operating an electronic device, the method comprising:
detecting at least one lens module that is mounted on a camera module, wherein the at least one lens module is removable and recognizable by a sensor module;
selectively activating a first operating system and a second operating system in accordance with the detected at least one lens module, wherein the second operating system is activated when a processor determines that a camera function has been performed; and
changing the operating system that is being used in accordance with a change of the detected at least one lens module.

2. The method of claim 1, wherein the detecting at least one lens module further comprises:
detecting a usability of the lens module; and
checking whether a lens cover is coupled to the lens module.

3. The method of claims 1 or 2, wherein the sensor module comprises a first sensor module that is used to determine whether the lens module is mounted and a second sensor module that is used to determine whether the lens module is usable.

4. The method of any preceding claim, wherein the changing the operating system that is being used in accordance with a change of the detected at least one lens module comprises deactivating the first operating system and activating the second operating system when the at least one lens module is mounted and useable.

5. The method of any preceding claim, wherein the changing the operating system that is being used in accordance with a change of the detected at least one lens module comprises deactivating the second operating system and activating the first operating system when the at least one lens module is detached and unusable.

6. The method of any preceding claim, wherein the first operating system is an operating system that includes at least one loading time, an execution time, or a stabilization time of an application that is longer than a corresponding time of the second operating system.

7. The method of any preceding claim, wherein the first operating system is an Android OS or a window OS, and the second operating system is a real time OS, RTOS, or a tizen OS.

8. The method of any preceding claim, wherein the first operating system is driven by at least one first processor and the second operating system is driven by at least one second processor that is independent of the first processor.

9. The method of claim 8, wherein the at least one first processor or the at least one second processor is activated in a power management state consuming power that is less than a specific value.

10. The method of claims 8 or 9, wherein the at least one first processor is driven together with a first memory and the at least one second processor is driven together with a second memory that is independent of the first memory.

11. The method of any preceding claim, wherein the electronic device comprises a memory that is commonly accessible by the first operating system and the second operating system.

12. The method of any preceding claim, wherein the first operating system or the second operating system is activated by a boot loader associated with a usable state of the lens module.

13. An electronic device:
at least one controller configured to:
detect at least one lens module that is mounted on a camera module, wherein the at least one lens module is removable and recognizable by a sensor module;
selectively activate a first operating system and a second operating system in accordance with the detected at least one lens module, wherein the second operating system is activated when a processor determines that a camera function has been performed; and
change the operating system that is being used in accordance with a change in the detected at least one lens module.

14. The electronic device of claim 13, wherein the changing the operating system that is being used in accordance with a change of the detected at least one lens module comprises deactivating the first operating system and activating the second operating system when the at least one lens module is mounted and useable.

15. The electronic device of claims 13 or 14, wherein the changing the operating system that is being used in accordance with a change of the detected at least one lens module comprises deactivating the second operating system and activating the first operating system when the at least one lens module is detached and unusable.
